# EUROPEAN PATENT APPLICATION

(11) **EP 4 523 593 A1**
(43) Date of publication of application: **19.03.2025**
(21) Application number: 23197716.6
(22) Date of filing: 15.09.2023
(51) Int. Cl.: A47L 13/16, A47L 13/258, A47L 13/44, B32B 5/00

(54) **DURABLE FLAT MOP COVER**

(71) Applicant: Carl Freudenberg KG, 69469 Weinheim (DE)
(72) Inventor: MALEKI-ROLLIN, Mahboubeh, 69493 Hirschberg (DE); DUNKEL, Jörg, 69115 Heidelberg (DE); EISENHUT, Andreas, 82049 Pullach (DE)

(57) **Abstract**

The invention relates to a durable flat mop cover for arranging on a mop-cover holder comprising an elongate main body with a cleaning side directed to a surface to be cleaned and a backside opposite thereto, wherein at least one, preferably two, pockets, for insertion of holding means of the mop cover holder are arranged on the backside. The pockets consist of solely non-woven material thus facilitating the use and maneuverability of the mop and simplifying and cheapening the manufacturing.

## Description

### Technical Field

The invention relates to a durable flat mop cover for arranging on a mop-cover holder comprising an elongate main body with a cleaning side directed to a surface to be cleaned and a backside opposite thereto, wherein at least one, preferably two, pockets, for insertion of holding means of the mop cover holder are arranged on the backside.

### Description

Flat mop covers of the above-mentioned type are known from the prior art. They are usually used for flat mops for floor cleaning purposes. These flat mops usually comprise an essentially rectangular mop plate which comprises two foldable wings. The wings are articulated to a central portion of the flat mop plate.

To attach the flat mop cover to the flat mop plate, the wings are folded down and inserted from above into the parallel pockets, the openings of which are opposite one another, and brought down into a parallel position so that the flat mop cover is stretched on the mop plate.

The pockets usually consist of a textile material made of yarns, preferably fabric. This material is well suited because it is very form-stable and has a very good wash durability which is essential for professional cleaning and for reusable flat mops. From the state of the art, it is known to form the pockets by folding over the mop cover on opposite sides and sewing the edges securely. From EP 3 087 895 B1, for example, a flat mop cover is known which has a rectangular shape with narrow and longitudinal sides which comprises a cleaning layer, an intermediate layer, and a cover sheet layer. On the narrow sides at the back of the layer system pockets are provided for receiving a flat mop holder which extend in the longitudinal direction. The pockets are formed by folding over the layer system and sewing it together at the edges.

A disadvantage of the known flat mop cover is that the pockets are inflexible due to the rigidity of the three-layer cleaning sheet which make both manufacturing and handling more difficult. Further, as the pockets are formed of the three-layer cleaning sheet the material costs for the pockets are considerably high.

The object of the present invention is to overcome the above-mentioned disadvantages and to provide a durable flat mop cover which is in addition to a high cleaning performance easy to handle and easy and inexpensive to produce.

Accordingly, a flat durable mop cover for arranging on a mop-cover holder was found which comprises an elongate main body with a cleaning side directed to a surface to be cleaned and a backside opposite thereto, wherein at least one, preferably two, pockets, for insertion of holding means of the mop cover holder are arranged on the backside, wherein the pockets consist of solely non-woven material.

Holding pockets made of nonwovens are already known in the field of disposable mops. However, there was a prejudice with respect to the stiffness and washing durability of the nonwoven material to use such pockets also for durable flat mop covers.

Durable flat mop cover means in the sense of this invention are flat mop covers that they can be washed and used again without losing their function: They can withstand at least 100 washing cycles and can be used further for cleaning purposes.

Surprisingly it has been found that nonwovens exist which meet these requirements.

Moreover, it has turned out that the pockets made of nonwoven material according to the invention can be inserted into the frame without any difficulty during whole life cycle. These nonwoven materials after at least 100 washing cycles (at 60 °C) were still form-stable, no hole, no pilling, no change in the thickness (± 5%) appeared.

According to a preferred embodiment of the invention the pockets are made of a spunbond nonwoven.

Spunbond nonwovens are known in the art. They are usually obtained from long continuous fibers spun from polymer melts passing through nozzles and stretched by cold air and/or mechanically. These fibers are then usually bond together to form a nonwoven fabric by chemical, mechanical, heat or solvent treatment.

It has turned out that spun bond nonwovens have the required stiffness to facilitate the insertion of the holding means into the pockets and a good washing durability making them well suited for durable flat mop covers. Preferably the spunbond nonwovens are thermally bonded, most preferred by calendaring, to further increase the stiffness and washing durability.

According to a most preferred embodiment of the invention the pocket material consists of one to four layers of spun bond nonwoven. Such a mop cover has the advantage that it is lighter than the mop covers known in the art resulting in increased maneuverability. It is easier to move and control, allowing the cleaning persons to navigate around obstacles with greater ease.

The inventive durable mop cover is more ergonomic by minimizing fatigue and making it easier to clean for longer periods of time. Increased speed and efficiency; move and clean more quickly without sacrificing cleaning performance.

The inventive nonwoven pockets do not need any extra reinforcement. Due to the high flexibility of the nonwoven material the holding means of a mop cover holder, in particular foldable wings, are easy to insert.

The inventive durable mop cover is easy and less costly to produce due to the less costly material for the pockets. No extra converting step is needed. No extra material is used for reinforcement. Further the laundry costs are lower.

The base weight of the spunbond nonwoven pocket material is preferably between about 50 g/sqm and about 300 g/sqm, most preferably about 150 g/sm. For base weights of lower than 50 g/sm the pockets are not sufficiently stiff, for base weights higher than 300 g/sm the point fusion due to calendaring is not sufficient resulting in a decrease of washing durability.

The pockets can be made of PES (Polyester) or PP (Polypropylene). Preferably the pockets are made of 100 % PES.

According to a preferred embodiment of the invention the elongate main body comprises a cleaning layer with a front cleaning side and a back side.

According to another preferred embodiment of the invention the elongate main body comprises a backing layer with a front side attached to the back side of the cleaning layer and a back side.

Preferably the backing layer is made of a nonwoven, more preferably a spunbond nonwoven, most preferably a spunbond nonwoven made of 100 % Polyester.

Preferably the pockets are separate elements which are attached to back side of the cleaning layer or backing layer, respectively.

According to another preferred embodiment of the invention the inventive durable mop cover has a rectangular or essentially rectangular shape. However, the inventive durable mop cover can also be trapezoidal or have any other longitudinal shape.

At least one, preferably two, pockets for insertion of the holding means of a mop cover holder are arranged on the backside of the cleaning layer or backing layer, respectively.

Preferably, the pockets are arranged opposite one another with the openings pointing towards each other. Preferably the pockets are arranged at the narrow sides of the flat mop cover. However, as also flat mops with foldable wings along the longitudinal axis of longitudinal mop plates are known the pockets can also be arranged in the same manner, that means arranged opposite one another with the openings facing each other, at the longitudinal sides of the flat mop cover.

The holding means of a mop cover holder are usually foldable wings which are articulated to a central portion of the flat mop plate. To attach the flat mop cover to the mop plate the foldable wings are folded down and inserted from above into the openings of the pockets. Then the wings are brought down into a parallel position so that the flat mop cover is stretched on the mop plate.

It has been shown that the insertion of the wings into the pockets is facilitated when the nonwoven pocket material is at least single folded at the edges of the pocket openings. However, also double and triple folding of the nonwoven pocket material at the edges of the pocket openings should be included in the invention.

It has been found that due to the folded edges no inner reinforcement of the open edges is necessary.

According to a preferred embodiment of the invention the cleaning layer comprises a sheet-like textile material. The sheet-like textile material can be a woven or a knitted fabric or the like.

Preferably, the sheet-like textile material is a cut pile woven fabric with of about 600 g/m² to 1100 g/m² wherein the pile is directed to the surface to be cleaned. According to a preferred embodiment of the invention the cut pile woven fabric comprises alternating regions of microfiber pile of 20% - 90% and brush pile of 5% to 30% related to the total cleaning surface.

Their microfiber combined with brush yarns make them good candidates for the effective removal of stubborn dirt.

The sheetlike textile material can be made of Polyester, Polypropylene, Polyamide, or a mixture of them. Preferably the sheet-like textile material is made of 100 % Polyester to make the cover, a mono-material structure crafted entirely from 100% polyester, rendering it fully recyclable.

The microfiber material of the cleaning layer has preferably an average fineness in the range of 0,6 dtex - 0,9 dtex, most preferably about 0,6 dtex.

The brush pile material of the cleaning layer has preferably an average fineness in the range of 20 dtex - 80 dtex, more preferably 30 dtex - 35 dtex.

According to the invention the cleaning layer as well as the backing layer can each comprise more than one layer.

The inventive flat mop cover can further comprise labels and color-coding tags at the backside.

A method for manufacturing the inventive durable flat mop cover comprises the steps:
providing a sheet-like textile material for the cleaning layer and cutting it into elongated pieces,
   optionally providing a sheet-like textile material for the backing layer (nonwoven material) and cutting it into elongated pieces, whose dimension correspond to those of the pieces of the sheet-like textile material for the cleaning layer, and
   attaching the cut pieces of the backing layer to the back side of the cut pieces of the cleaning layer to completely cover it,
providing one single layer of a nonwoven material, cutting pockets out of this nonwoven material, and attaching the pockets to the back side of the elongate cleaning layer or backing layer, respectively.
connecting all layers together along their edges by means of a sewing process.

Preferably, the sewing process is an overlock sewing process. However, it can be a binding band combined with stitching.

Now, further advantages and features of the invention will be described with reference to the preferred embodiment as shown in the drawings.
Fig. 1 shows in a schematic representation a flat mop cover according to a preferred embodiment of the invention in top view,
Fig. 2 shows in a schematic representation the flat mop cover of Fig. 1 without a backing layer in back view,
Fig. 3 shows in a schematic representation a flat mop cover of Fig. 1 according to another preferred embodiment of the invention comprising a backing layer in back view.

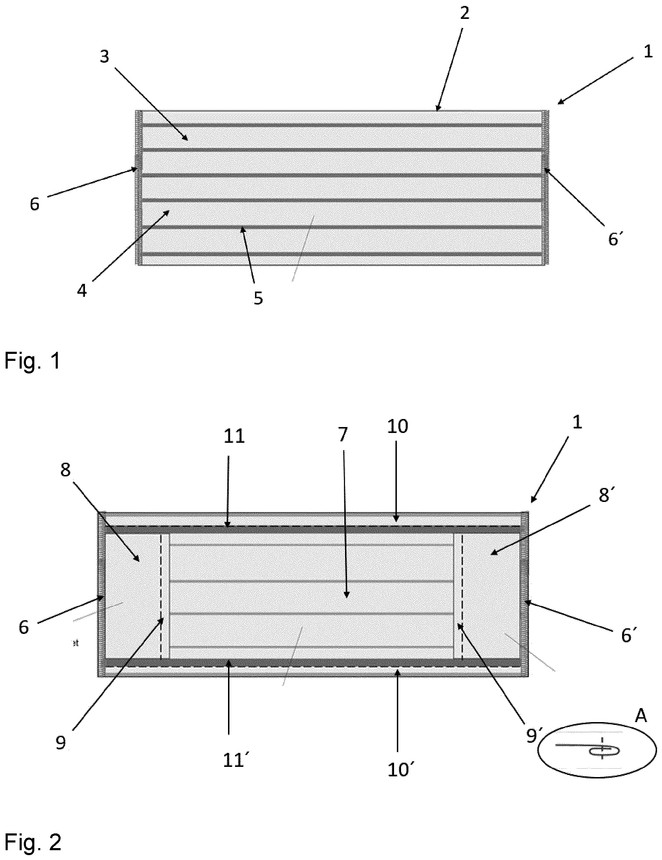

Fig. 1 shows of an inventive flat mop 1 cover with an elongate main body 2. The elongate main body 2 comprises a cleaning layer. Fig. 1 shows the front cleaning side 3 of the cleaning layer. According to a preferred embodiment of the invention the cleaning layer is made of a cut pile woven fabric wherein the front cleaning layer 3 is formed by cut piles which are directed towards the surface to be cleaned. Without limitation of generality in the shown embodiment wider stripes of microfiber piles (white) 4 and smaller stripes of brush piles (grey) 5 alternate.

The cutpile fabric, can have different designs including brush islands or interrupted point & line brush areas (not shown in the figure).

The cleaning layer is sewn by overlocked at the outer edges of the narrow sides 6, 6'.

Fig. 2 shows the back side of the elongate main body 2. The reference number 7 designates the back side of the cleaning layer, which is provided with two pockets 8, 8' at the narrow ends of the elongate main body. The pockets 8, 8'are made of nonwoven and sewn on the back side 7 of the cleaning layer along the overlapping outer edges.

At the edges 9, 9'of the openings of the pockets 8, 8' the nonwoven material is double folded as shown in the enlarged section A to provide more stiffness thus facilitating the insertion of the holding means.

At the long edges 10, 10' the cleaning layer is folded over the back side and sewn.

11, 11 'designates is the binding bands used to cover the long side of the mop and then it is sewn to the long side of the mop. The binding band can be simply exchanged with overlock to cover the edges of the long side.

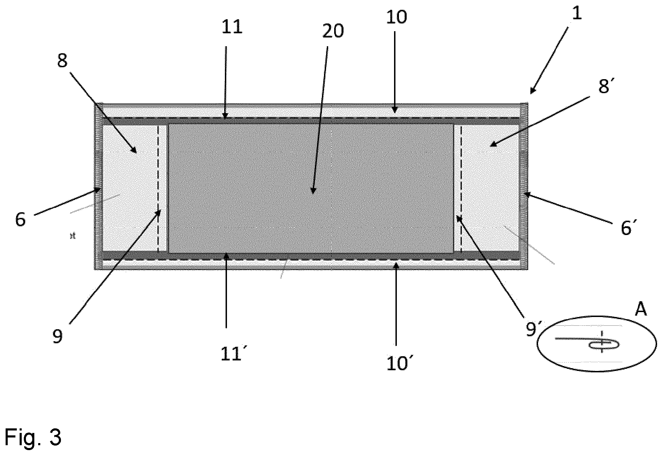

The flat mop cover 1 shown in Fig. 3 comprises an elongate main body with a cleaning layer and a backing layer attached to the back side of the cleaning layer. In Fig. 3 the back side of the backing layer is designated with the reference number 20. In this preferred embodiment the pockets 8, 8'are attached to the back side 20 of the backing layer. At the long edges 10, 10'the cleaning layer is folded over the back side 20 of the backing layer.

## Claims

1. Durable flat mop cover for arranging on a mop-cover holder comprising an elongate main body with a cleaning side directed to a surface to be cleaned and a backside opposite thereto, wherein at least one, preferably two, pockets, for insertion of holding means of the mop cover holder are arranged on the backside, **characterized in that** the pockets consist of solely non-woven material.

2. Durable flat mop cover according to claim 1, **characterized in that** the nonwoven is thermally bonded, preferably by calendaring.

3. Durable flat mop cover according to claim 1 or 2, **characterized in that** the nonwoven is a spunbond nonwoven.

4. Durable flat mop cover according to at least one of claims 1 to 3, **characterized in that** the pocket material consists of one to four layers of spun bond nonwoven

5. Durable flat mop cover according to claim 3 or 4, **characterized in that** the basis weight of the spunbond nonwoven layer is between about 50 g/m² and 300 g/m².

6. Durable flat mop cover according to at least one of claims 1 to 5, **characterized in that** the elongate main body comprises a cleaning layer with a front cleaning side and a back side.

7. Durable flat mop cover according to at least one of claims 1 to 6, **characterized in that** the elongate main body further comprises a backing layer with a front side attached to the back side of the cleaning layer and a back side.

8. Durable Flat Mop according to at least on of claims 1 to 7, **characterized in that** the pockets are separate elements which are attached to back side of the cleaning layer or backing layer, respectively.

9. Durable flat mop according to at least one of claims 1 to 8, **characterized in that** the pockets are arranged opposite to each other at the longitudinal edges of the elongate main body with openings which point towards each other.

10. Durable flat mop according to at least one of claims 1 to 9, **characterized in that** the single spunbond nonwoven layer material is double folded at the edges of the pocket openings.

11. Durable flat mop according to at least one of claims 1 to 10, **characterized in that** the cleaning layer comprises a sheet-like textile material made of a cut pile woven fabric.

12. Durable flat mop according to at least one of the claims 1 to 11, **characterized in that** the backing layer is made of a nonwoven.

13. Durable flat mop according to claim 12, **characterized in that** the nonwoven is a spun bond nonwoven.

14. Method for manufacturing a durable flat mop according to at least one of claims 1 to 13, comprising the steps:
i) providing a sheet-like textile material for the cleaning layer and cutting it into elongated pieces,
a. optionally providing a sheet-like textile material for the backing layer and cutting it into elongated pieces, whose dimension correspond to those of the pieces of the sheet-like textile material for the cleaning layer, and
b. attaching the cut pieces of the backing layer to the back side of the cut pieces of the cleaning layer to completely cover it,
ii) providing one single layer of a nonwoven material, cutting pockets out of this nonwoven material, and attaching the pockets to the back side of the elongate cleaning layer or backing layer, respectively.
iii) connecting all layers together along their edges by means of a sewing process.

15. Method according to claim 14, **characterized in that** the sewing process is an overlock sewing process or/and combined with extra woven binding band or/and folding on all edges.
